# EUROPÄISCHE PATENTSCHRIFT

(11) **EP 2 861 642 B1**
(45) Veröffentlichungstag und Bekanntmachung des Hinweises auf die Patenterteilung: **17.10.2018**
(21) Anmeldenummer: 13728757.9
(22) Anmeldetag: 14.06.2013
(51) Int. Cl.: C08G 18/10, C08G 18/48, C09J 175/08, C09J 201/10, C08G 18/71, C08G 77/04, C07F 7/18

(54) **SILANGRUPPEN-HALTIGES POLYMER**
SILANE-FUNCTIONAL POLYMER
POLYMÈRE CONTENANT DES GROUPES DE SILANES

(30) Priorität: 15.06.2012 EP 12172118
(43) Veröffentlichungstag der Anmeldung: 22.04.2015
(73) Patentinhaber: Sika Technology AG, 6340 Baar (CH)
(72) Erfinder: BURCKHARDT, Urs, CH-8049 Zürich (CH); KRAMER, Andreas, CH-8006 Zürich (CH)
(74) Vertreter: Sika Patent Attorneys
(86) Internationale Anmeldenummer: PCT/EP2013/062349
(87) Internationale Veröffentlichungsnummer: WO 2013/186349

(56) Entgegenhaltungen:
- EP-A1- 0 596 360
- EP-A1- 1 544 204
- EP-A2- 0 768 313
- WO-A1-00/26271
- WO-A1-02/34858
- US-A- 4 555 561
- MAHMUT ULUSOY ET AL: "Silicon containing new salicylaldimine Pd(II) and Co(II) metal complexes as efficient catalysts in transformation of carbon dioxide (CO) to cyclic carbonates", JOURNAL OF ORGANOMETALLIC CHEMISTRY, ELSEVIER-SEQUOIA S.A. LAUSANNE, CH, Bd. 696, Nr. 7, 3. Januar 2011 (2011-01-03), Seiten 1372-1379, XP028174218, ISSN: 0022-328X, DOI: 10.1016/J.JORGANCHEM.2011.01.005 [gefunden am 2011-01-12]

## Beschreibung

### Technisches Gebiet

Die Erfindung betrifft Silangruppen-haltige Verbindungen, insbesondere in der Form von Silangruppen-haltigen Polymeren, und ihre Verwendung als Bestandteil von feuchtigkeitshärtenden Zusammensetzungen, welche insbesondere zum Verkleben und Abdichten von Bau- und Industrieprodukten einsetzbar sind.

### Stand der Technik

Silangruppen-haltige Verbindungen sind vielseitig verwendbar, beispielsweise als haftvermittelnde Bestandteile von Klebstoffen, Dichtstoffen, Beschichtungen und Primern. Insbesondere in der Form von Silangruppen-haltigen Polymeren, auch "silanfunktionelle Polymere" oder "silanterminierte Polymere" oder "STP" genannt, werden sie seit einiger Zeit auch erfolgreich als isocyanatfreies Bindemittel in feuchtigkeitshärtenden Zusammensetzungen eingesetzt, die insbesondere als elastische Kleb- und Dichtstoffe in der Bau- und Fertigungsindustrie Verwendung finden.
Ein einfach durchzuführender Weg zu Silangruppen-haltigen Polymeren, der von breit erhältlichen Rohstoffen ausgeht und damit kommerziell attraktiv ist, führt über die Umsetzung von Aminosilanen mit Isocyanatgruppen-haltigen Polyurethanpolymeren, wobei die Silangruppen schliesslich über Harnstoffgruppen ans Polymer gebunden sind. Um die starke Viskositätserhöhung durch die dabei entstehenden Harnstoffgruppen abzumildern, werden insbesondere sekundäre Aminosilane eingesetzt. Beliebt sind dabei vor allem Addukte primärer Aminosilane mit Michael-Akzeptoren wie Fumar- oder Maleinsäureestern, beschrieben beispielsweise bei US 5,364,955. Es besteht aber Bedarf an weiteren Silangruppen-haltigen Verbindungen mit vorteilhaften Eigenschaften, insbesondere als isocyanatfreies Bindemittel für die Anwendung in elastischen Dichtstoffen und/oder Klebstoffen.

### Darstellung der Erfindung

Aufgabe der vorliegenden Erfindung ist es daher, neue Silangruppen-haltige Verbindungen zur Verfügung zu stellen, welche sich vorteilhaft in elastischen Dichtstoffen oder Klebstoffen einsetzen lassen.
Überraschenderweise wurde gefunden, dass Verbindungen nach Anspruch 1 diese Aufgabe lösen. Sie weisen eine vergleichsweise tiefe Viskosität auf und können beispielsweise als Bindemittel, Haftvermittler oder Vernetzer verwendet werden. Insbesondere in der Form von Silangruppen-haltigen Polymeren härten sie mit Feuchtigkeit überraschend schnell zu einem nichtklebrigen, elastischen Material mit guter Festigkeit, Dehnbarkeit und Wärmebeständigkeit aus und eignen sich hervorragend als isocyanatfreies Bindemittel für elastische Dichtstoffe oder Klebstoffe.
Die Verbindungen sind in einem einfachen Verfahren ausgehend von Polyisocyanaten und speziellen, Aldiminogruppen aufweisenden sekundären Aminosilanen herstellbar.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Verbindung mit mindestens einer Reaktivgruppe der Formel (I), 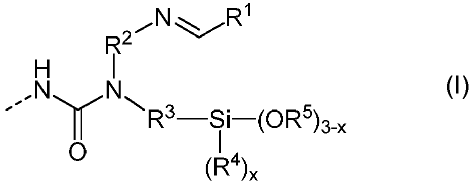 wobei
R¹ für einen einwertigen organischen Rest mit 5 bis 30 C-Atomen steht;
R² für einen linearen oder verzweigten Alkylen- oder Cycloalkylenrest mit 2 bis 6 C-Atomen steht;
R³ für einen linearen oder verzweigten Alkylen- oder Cycloalkylenrest mit 1 bis 12 C-Atomen steht;
R⁴ für eine Alkylgruppe mit 1 bis 6 C-Atomen steht;
R⁵ für eine Alkylgruppe mit 1 bis 10 C-Atomen, welche gegebenenfalls eine oder mehrere Ether-Sauerstoffe aufweist, steht; und
x für 0 oder 1 steht;
dadurch gekennzeichnet, dass sie ein silanfunktionelles Polymer darstellt und frei ist von Isocyanatgruppen, wobei für die Herstellung der Verbindung mit mindestens einer Reaktivgruppe der Formel (I) durch Umsetzung von mindestens einem Polyisocyanat mit mindestens einem sekundären Aminosilan der Formel (V) 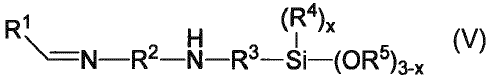
   zu einem Addukt ein NH/NCO-Verhältnis von 1.0 bis 1.25 verwendet wird; oder
   dass sie ein Isocyanatosilan der Formel (IV) darstellt, 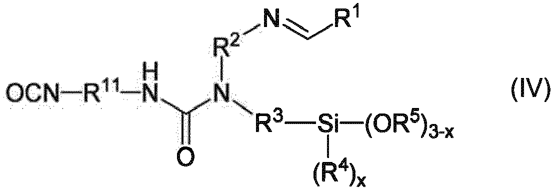 wobei
      R¹¹ für einen zweiwertigen Kohlenwasserstoffrest mit 4 bis 16 C-Atomen steht, und wobei für die Herstellung des Isocyanatosilans der Formel (IV) ein NH/NCO-Verhältnis von ungefähr 0.5 verwendet wird.

Im vorliegenden Dokument bezeichent der Begriff "Silan" beziehungsweise "Organosilan" Verbindungen, welche einerseits mindestens eine, üblicherweise zwei oder drei, über Si-O-Bindungen direkt ans Siliciumatom gebundene Alkoxygruppen aufweisen, und andererseits mindestens einen über eine Si-C-Bindung direkt ans Siliciumatom gebundenen organischen Rest aufweisen. Entsprechend bezeichnet der Begriff "Silangruppe" ein Silan, welches via seinen organischen Rest gebunden ist.
Als "Aminosilan", "Isocyanatosilan" und dergleichen werden Organosilane bezeichnet, welche am organischen Rest eine entsprechende funktionelle Gruppe, also eine Aminogruppe oder Isocyanatgruppe, aufweisen.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.
Der Begriff "Polyurethanpolymer" umfasst sämtliche Polymere, welche nach dem sogenannten Diisocyanat-Polyadditions-Verfahren hergestellt werden. Der Begriff "Polyurethanpolymer" umfasst auch Isocyanatgruppen aufweisende Polyurethanpolymere, wie sie aus der Umsetzung von Polyisocyanaten und Polyolen erhältlich sind und selber Polyisocyanate darstellen und oft auch Prepolymere genannt werden.
Unter "Molekulargewicht" von Oligomeren oder Polymeren versteht man im vorliegenden Dokument das Molekulargewichtsmittel Mn (Zahlenmittel), welches typischerweise mittels GPC gegen Polystyrol als Standard bestimmt wird.

Die Reaktivgruppe der Formel (I) weist sowohl eine Silangruppe als auch eine Aldiminogruppe auf. Silangruppen haben die Eigenschaft, bei Kontakt mit Feuchtigkeit zu hydrolysieren. Dabei bilden sich Silanolgruppen (Si-OH-Gruppen) und durch nachfolgende Kondensationsreaktionen Siloxangruppen (Si-O-Si-Gruppen). Aldiminogruppen können ebenfalls bei Kontakt mit Feuchtigkeit hydrolysieren, wobei unter Freisetzung eines Aldehyds formal eine primäre Aminogruppe entsteht. Die Hydrolyse erfolgt typischerweise erst dann in höherem Ausmass, wenn für die formal entstehende primäre Aminogruppe ein geeigneter Reaktionspartner, insbesondere eine Isocyanatgruppe, zur Verfügung steht.

Bevorzugt steht R¹ für einen Aryl-, Alkyl- oder Cycloalkylrest mit 5 bis 30 C-Atomen, welcher gegebenenfalls eine oder mehrere Ethergruppen, Estergruppen, Amidogruppen oder tertiäre Aminogruppen aufweist, insbesondere für Phenyl, 2-Pentyl, 3-Pentyl, 3-Heptyl, 1-Undecyl und Cyclohexyl oder einen der als besonders bevorzugt erwähnten Reste.
Bevorzugt steht R² für 1,2-Ethylen.
Bevorzugt steht R³ für einen Alkylenrest mit 1 bis 6 C-Atomen, insbesondere für 1,3-Propylen.
Bevorzugt steht R⁴ für eine Methylgruppe.
Bevorzugt steht R⁵ für eine Methylgruppe oder eine Ethylgruppe.

Reaktivgruppen mit diesen bevorzugten Resten R¹ bis R⁵ sind abgeleitet von besonders gut zugänglichen sekundären Aminosilanen.
Reaktivgruppen der Formel (I), bei denen R⁵ für eine Methylgruppe steht, weisen den Vorteil auf, dass sie besonders schnell hydrolysieren.
Reaktivgruppen der Formel (I), bei denen R⁵ für eine Ethylgruppe steht, weisen den Vorteil auf, dass bei ihrer Hydrolyse kein Methanol freigesetzt wird, was aus toxikologischen Gründen vorteilhaft ist.

Bevorzugt steht x für 0. Diese Reaktivgruppen hydrolysieren bei Kontakt mit Feuchtigkeit besonders schnell und ermöglichen im ausgehärteten Zustand hohe Festigkeiten.

Besonders bevorzugt steht R¹ für einen Rest der Formel (II), 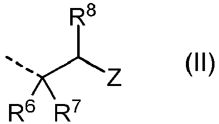 wobei
R⁶ und R⁷
   entweder einzeln jeweils für einen einwertigen Kohlenwasserstoffrest mit 1 bis 12 C-Atomen stehen,
   oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
R⁸ für Wasserstoff oder für eine Arylalkyl- oder Cycloalkyl- oder Alkylgruppe mit 1 bis 12 C-Atomen, insbesondere für ein Wasserstoffatom, steht; und Z für eine Ether-, Ester-, Amido- oder tertiäre Aminogruppe mit bis zu 25 C-Atomen steht, wobei diese gegebenenfalls zusätzliche Ether-Sauerstoffe aufweisen.
Diese Reaktivgruppen der Formel (I) ermöglichen geruchsarme oder geruchsfreie Verbindungen, welche bei der Hydrolyse der Aldiminogruppen einen geruchsarmen oder geruchsfreien Aldehyd freisetzen. Sie enthalten eine Aldiminogruppe, die nicht durch Tautomerisierung in eine Enaminogruppe überführbar ist. Solche Aldiminogruppen weisen am Kohlenstoffatom in α-Stellung zum Aldimin-Kohlenstoffatom kein Wasserstoffatom auf. Sie sind abgeleitet von Aldehyden, welche am Kohlenstoffatom in α-Stellung zum Kohlenstoffatom der Aldehydgruppe kein Wasserstoffatom aufweisen. Solche Aldiminogruppen hydrolysieren bei Kontakt mit Feuchtigkeit besonders langsam. Zudem sind sie zusammen mit Isocyanatgruppen unter Ausschluss von Feuchtigkeit besonders lagerstabil.

Bevorzugt stehen R⁶ und R⁷ jeweils für einen Methylrest.
Bevorzugt steht R⁸ für ein Wasserstoffatom.
Diese Reaktivgruppen der Formel (I) sind besonders einfach zugänglich und ergeben besonders tiefe Viskositäten.

Bevorzugt steht Z für Acetoxy, Lauroyloxy oder einen jeweils am Stickstoff substituierten N-Methylacetamid-, Pyrrolidin-2-on- oder Azepan-2-on-Rest. Diese Reaktivgruppen der Formel (I) sind sehr geruchsarm oder geruchsfrei und besonders lagerstabil zusammen mit sehr reaktiven Isocyanatgruppen.

In einer für bestimmte Anwendungen bevorzugten Ausführungsform der Erfindung steht Z eine Ether-, Amido- oder tertiäre Aminogruppe mit bis zu 25 C-Atomen steht, wobei diese gegebenenfalls zusätzliche Ether-Sauerstoffe aufweisen. Gegenüber dem Fall, bei welchem Z für eine Estergruppe steht, treten bei diesen bevorzugten Gruppen keine Umesterungen innerhalb der Zusammensetzung auf.

Besonders bevorzugt steht Z für einen Rest der Formel (III), 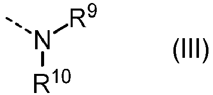 wobei
R⁹ und R¹⁰
entweder einzeln jeweils für einen einwertigen aliphatischen, cycloaliphatischen oder arylaliphatischen Rest mit 1 bis 20 C-Atomen, welcher gegebenenfalls Heteroatome in der Form von Ether-Sauerstoff oder tertiärem Amin-Stickstoff enthält, stehen,
oder zusammen für einen zweiwertigen aliphatischen Rest mit 3 bis 20 C-Atomen, der unter Einschluss des Stickstoffatoms einen heterocyclischen Ring mit 5 bis 8, bevorzugt 6, Ringatomen bildet und neben dem Stickstoffatom gegebenenfalls weitere Heteroatome in der Form von Ether-Sauerstoff oder tertiärem Amin-Stickstoff enthält, stehen.
Diese Reaktivgruppen der Formel (I) sind sehr geruchsarm oder geruchsfrei, aus einem einfachen Verfahren aus gut erhältlichen und kostengünstigen Ausgangsmaterialien zugänglich und besonders lagerstabil in Gegenwart von primären oder sekundären Aminen.

Bevorzugt stehen R⁹ und R¹⁰
entweder einzeln jeweils für eine Methyl-, Ethyl-, Propyl-, Isopropyl-, Butyl-, Isobutyl-, 2-Ethylhexyl-, Cyclohexyl-, Benzyl- oder Alkoxyethyl-Gruppe, oder sie bilden zusammen unter Einschluss des Stickstoffatoms einen Pyrrolidin-, Piperidin-, Hexamethylenimin-, Morpholin-, 2,6-Dimethylmorpholin-, Thiomorpholin- oder 4-Methylpiperazin-Ring, insbesondere einen Morpholin-, 2,6-Dimethylmorpholin-, Thiomorpholin- oder 4-Methylpiperazin-Ring. Besonders bevorzugt stehen R⁹ und R¹⁰ jeweils unabhängig voneinander für eine Methylgruppe oder eine Methoxyethylgruppe, oder bilden zusammen unter Einschluss des Stickstoffatoms einen Morpholinring.
Diese Reaktivgruppen der Formel (I) sind unter Ausschluss von Feuchtigkeit zusammen mit Isocyanatgruppen besonders lagerstabil.

Die Reste in den Formeln (II) und (III) sind insbesondere so ausgewählt, dass der gesamte Reste R¹ nicht mehr als 30 C-Atome aufweist.

Die Reaktivgruppen der Formel (I) sind insbesondere mehrheitlich an cycloaliphatische Reste gebunden. Diese Verbindungen weisen besonders tiefe Viskositäten auf und sind besonders lichtstabil.

In einer bevorzugten Ausführungsform weist die Verbindung mit Reaktivgruppen der Formel (I) mindestens eine Isocyanatgruppe auf. Eine solche Verbindung kann vorteilhaft in härtbaren Massen eingesetzt werden, insbesondere als Bindemittel, Haftvermittler oder Vernetzer, oder als Zwischenprodukt zum Aufbau von silanfunktionellen Polymeren.

Eine besonders bevorzugte Verbindung mit Reaktivgruppen der Formel (I) stellt ein Isocyanatosilan der Formel (IV) dar, 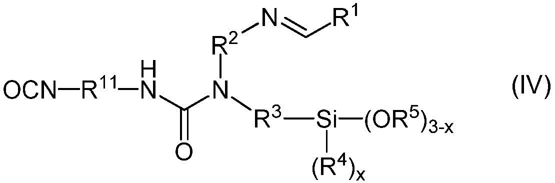 wobei
R¹¹ für einen zweiwertigen Kohlenwasserstoffrest mit 4 bis 16 C-Atomen steht; und R¹, R², R³, R⁴, R⁵ und x die bereits genannten Bedeutungen aufweisen. Bevorzugt steht R¹¹ für 1,6-Hexylen, 2,2,4- und 2,4,4-Trimethyl-1,6-hexylen, 1,3- und 1,4-Cyclohexylen, 1,3- und 1,4-Xylylen, 1,3- und 1,4-Tetramethylxylylen, 4,4'- und 2,4'-substituiertes Diphenylmethan, 2,4- und 2,6-substituiertes Toluol und 1-Isocyanato-3,3,5-trimethyl-5-isocyanatomethyl-cyclohexan (=Isophorondiisocyanat oder IPDI) nach Entfernung der zwei Isocyanatgruppen. Besonders bevorzugt steht R¹¹ für IPDI nach Entfernung der zwei Isocyanatgruppen.
Diese Isocyanatosilane stellen gut zugängliche, lagerstabile Substanzen dar, insbesondere für den Fall, dass R¹ für einen Rest der Formel (II) steht.
Ein Isocyanatosilan der Formel (IV) kann insbesondere verwendet werden als Zwischenprodukt zum Aufbau von silanfunktionellen Polymeren.

In einer weiteren bevorzugten Ausführungsform ist die Verbindung mit Reaktivgruppen der Formel (I) frei von Isocyanatgruppen. Sie weist bevorzugt zwei, drei oder vier, besonders bevorzugt zwei oder drei, insbesondere zwei, Reaktivgruppen der Formel (I) auf.
Für den Fall, dass Z keine Estergruppe aufweist, und für den bevorzugten Fall, dass Z für einen Rest der Formel (III) steht, können die Verbindungen mit Reaktivgruppen der Formel (I) frei von Isocyanatgruppen sein oder Reaktivgruppen der Formel (I) zusammen mit Isocyanatgruppen aufweisen. Steht der Rest Z für eine Estergruppe, ist die Verbindung mit Reaktivgruppen der Formel (I) bevorzugt frei von Isocyanatgruppen.

Besonders bevorzugt ist die Verbindung mit Reaktivgruppen der Formel (I) ein silanfunktionelles Polymer, welches frei ist von Isocyanatgruppen. Ein solches silanfunktionelles Polymer wird im Folgenden als Polymer **SP** bezeichnet.

Bevorzugt weist das Polymer **SP** ein Molekulargewicht im Bereich von 1'000 bis 30'000 g/mol, bevorzugt 2'000 bis 25'000 g/mol, besonders bevorzugt 3'000 bis 20'000 g/mol, und insbesondere von 4'000 bis 15'000 g/mol, auf. Ein solches Polymer ermöglicht nach der Aushärtung gute mechanische Eigenschaften.

Bevorzugt weist das Polymer **SP** mehrheitlich Polyoxyalkyleneinheiten, besonders bevorzugt Polyoxyethylen- und/oder Polyoxypropyleneinheiten, insbesondere Polyoxypropyleneinheiten, auf. Ein solches Polymer weist eine besonders tiefe Viskosität auf und ermöglicht besonders gute mechanische Eigenschaften.

Die Verbindung mit Reaktivgruppen der Formel (I) ist unter Ausschluss von Feuchtigkeit lagerstabil. Bei Kontakt mit Feuchtigkeit hydrolysieren die vorhandenen Silangruppen. Dabei bilden sich Silanolgruppen und durch nachfolgende Kondensationsreaktionen Siloxangruppen. Dadurch entsteht eine Vernetzung, wodurch die Verbindung schliesslich aushärtet. Die vorhandenen Aldiminogruppen können ebenfalls mit Feuchtigkeit hydrolysieren, wobei unter Freisetzung eines Aldehyds formal eine primäre Aminogruppe entsteht. Aldimine hydrolysieren typischerweise aber erst dann in höherem Ausmass, wenn für die formal entstehende primäre Aminogruppe ein geeigneter Reaktionspartner, insbesondere eine Isocyanatgruppe, zur Verfügung steht. Durch die Reaktion von hydrolysierenden Aldiminogruppen, beispielsweise mit vorhandenen Isocyanatgruppen, kann eine weitere Vernetzung erfolgen. Aufgrund dieser Reaktionen härtet die Verbindung zu einem vernetzten Kunststoff aus. Somit betrifft die vorliegende Erfindung auch einen vernetzten Kunststoff, welcher durch die Reaktion mindestens einer Verbindung mit Reaktivgruppen der Formel (I) mit Feuchtigkeit erhalten wird.

In Form der vorgängig beschriebenen Polymere **SP** weisen die Verbindungen mit Reaktivgruppen der Formel (I) besonders vorteilhafte Eigenschaften auf. Ihre Viskosität ist vergleichsweise niedrig, was für ihre weitere Verarbeitung, beispielsweise als feuchtigkeitshärtende Zusammensetzung, vorteilhaft ist. Sie weisen eine ausgezeichnete Lagerstabilität auf und härten mit Feuchtigkeit schnell zu einem elastischen Material mit guter Festigkeit und Dehnbarkeit und guter Wärmebeständigkeit aus.

Das Polymer **SP** ist besonders geeignet als Bestandteil von härtbaren Massen, insbesondere zur Formulierung von silanfunktionellen feuchtigkeitshärtenden Zusammensetzungen.

Weiterhin betrifft die vorliegende Erfindung ein Verfahren zur Herstellung einer Verbindung mit mindestens einer Reaktivgruppe der Formel (I) durch Umsetzung von mindestens einem Polyisocyanat mit mindestens einem sekundären Aminosilan der Formel (V) zu einem Addukt. 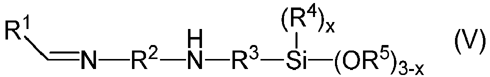 In der Formel (V) weisen R¹, R², R³, R⁴, R⁵ und x die bereits genannten Bedeutungen auf.
Bei dieser Umsetzung werden die sekundären Aminogruppen bevorzugt entweder im unterstöchiometrischen, im stöchiometrischen oder in einem leicht überstöchiometrischen Verhältnis gegenüber den Isocyanatgruppen eingesetzt. Bevorzugt wird die Umsetzung bei Raumtemperatur durchgeführt.
Um Isocyanatgruppen-freie Verbindungen mit mindestens einer Reaktivgruppe der Formel (I) zu erhalten wird insbesondere ein NH/NCO-Verhältnis von 1.0 bis 1.25 verwendet.
Um Isocyanatgruppen-haltige Verbindungen mit mindestens einer Reaktivgruppe der Formel (I) zu erhalten wird insbesondere ein NH/NCO-Verhältnis von 0.1 bis 0.9, bevorzugt 0.3 bis 0.7, verwendet.
Um ein Isocyanatosilan der Formel (IV) zu erhalten wird insbesondere ein NH/NCO-Verhältnis von ungefähr 0.5 verwendet.

Als Polyisocyanat geeignet sind insbesondere die folgenden handelsüblichen Polyisocyanate oder beliebige Mischungen davon:
- monomere aliphatische, cycloaliphatische oder arylaliphatische Polyisocyanate, wie insbesondere 1,4-Tetramethylendiisocyanat, 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI), 1-Isocyanato-3,3,5-trimethyl-5-isocyanatomethyl-cyclohexan (=Isophorondiisocyanat oder IPDI), Perhydro-2,4'- und - 4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, mund p-Xylylendiisocyanat (m- und p-XDI), 1,3,5-Tris-(isocyanatomethyl)-benzol, m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylen-triisocyanat;
- monomere aromatische Polyisocyanate, wie insbesondere 2,4- und 2,6-Toluylen-diisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Tris-(4-isocyanatophenyl)-methan, Tris-(4-isocyanatophenyl)-thiophosphat;
- Oligomere der genannten Polyisocyanate enthaltend Uretdion-, Isocyanurat- oder Iminooxadiazindiongruppen; modifizierte Polyisocyanate enthaltend Ester-, Harnstoff-, Urethan-, Biuret-, Allophanat-, Carbodiimid-, Uretonimin- oder Oxadiazintriongruppen; sowie
- Isocyanatgruppen aufweisende Polyurethanpolymere, das heisst mehr als eine Isocyanatgruppe aufweisende Umsetzungsprodukte von Polyisocyanaten mit zwei oder mehr Hydroxylgruppen aufweisenden Substanzen (so genannten "Polyolen"), wie beispielsweise mehrwertigen Alkoholen, Glykolen oder Aminoalkoholen, polyhydroxyfunktionellen Polyethern, Polyestern, Polyacrylaten, Polycarbonaten oder Polykohlenwasserstoffen.

Zur Herstellung eines Isocyanatosilans der Formel (IV) geeignet sind insbesondere 1,6-Hexamethylendiisocyanat, 2,2,4- und 2,4,4-Trimethyl-1,6-hexamethylendiisocyanat, Cyclohexan-1,3- und -1,4-diisocyanat, 1-Isocyanato-3,3,5-trimethyl-5-isocyanatomethyl-cyclohexan, m- und p-Xylylendiisocyanat, Tetramethyl-1,3- und -1,4-xylylendiisocyanat, 4,4'- und 2,4'-Diphenylmethandiisocyanat und 2,4- und 2,6-Toluylendiisocyanat.
Davon bevorzugt sind 1,6-Hexamethylendiisocyanat, 1-Isocyanato-3,3,5-trimethyl-5-isocyanatomethyl-cyclohexan, 4,4'- und 2,4'-Diphenylmethandiisocyanat und 2,4- und 2,6-Toluylendiisocyanat, insbesondere 1-Isocyanato-3,3,5-trimethyl-5-isocyanatomethyl-cyclohexan.

Ein Polymer **SP** ist in einer bevorzugten Ausführungsform erhältlich durch die Umsetzung von mindestens einem Isocyanatgruppen aufweisenden Polyurethanpolymer mit mindestens einem sekundären Aminosilan der Formel (V), wobei das Polyurethanpolymer erhalten wird durch Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, insbesondere bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 - 5 Gew.-%, bevorzugt 0.1 - 2.5 Gew.-%, besonders bevorzugt 0.2 - 1 Gew.-%, bezogen auf das gesamte Polymer verbleibt. Bevorzugt sind Polyurethanpolymere mit dem genannten Gehalt an freien Isocyanatgruppen, welche aus der Umsetzung von Diisocyanaten mit hochmolekularen Diolen in einem NCO/OH-Verhältnis von 1.5 bis 2.2, insbesondere 1.8 bis 2.0, erhalten werden. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.
Es ist auch möglich, bei der Herstellung eines Polymers **SP** zusätzlich zum sekundären Aminosilan der Formel (V) weitere Silane mit einer gegenüber Isocyanaten reaktiven Gruppen zu verwenden, insbesondere Aminosilane mit einer sekundären oder einer primären Aminogruppe, Hydroxysilane oder Mercaptosilane. Auf diese Weise sind Polymere **SP** erhältlich, welche neben mindestens einer Reaktivgruppe der Formel (I) mindestens eine weitere Silangruppe aufweisen.

Als Polyol für die Herstellung des Isocyanatgruppen aufweisenden Polyurethanpolymers geeignet sind insbesondere die folgenden handelsüblichen Polyole oder beliebige Mischungen davon:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Bevorzugt sind Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren).
   Besonders geeignet sind Polyoxyalkylendiole oder Polyoxyalkylentriole, insbesondere Polyoxyethylen- und Polyoxypropylendi- und -triole.
   Weiterhin besonders geeignet sind sogenannte Ethylenoxid-terminierte (EOendcapped) Polyoxypropylenpolyole. Letztere sind Polyoxyethylen-polyoxypropylen-Mischpolyole, die beispielsweise dadurch erhalten werden, dass Polyoxypropylenpolyole nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol bevorzugt sind Polyoxyalkylenpolyole, Polyesterpolyole, Polycarbonatpolyole und Polyacrylatpolyole. Besonders bevorzugt sind Polyoxyalkylenpolyole.
Bevorzugte Polyoxyalkylenpolyole sind Polyoxypropylenpolyole und Polyoxyethylen-polyoxypropylen-Mischpolyole.
Das Polyol weist bevorzugt ein Molekulargewicht von 1'000 bis 20'000 g/mol, besonders bevorzugt von 2'000 bis 20'000 g/mol auf.
Das Polyol ist bevorzugt ein Diol.
Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen aufweisenden Polyurethanpolymers mitverwendet werden. Ein Polymer **SP** ist in einer weiteren bevorzugten Ausführungsform erhältlich durch die Umsetzung von mindestens einem Isocyanatosilan der Formel (IV) mit mindestens einem Polyol, wie es vorgängig zur Herstellung eines Isocyanatgruppen aufweisenden Polyurethanpolymers genannt wurde. Bei dieser Umsetzung wird bevorzugt ein NCO/OH-Verhältnis von ungefähr 1.0 verwendet. Bevorzugt sind Polyoxyalkylenpolyole, Polyesterpolyole, Polycarbonatpolyole und Polyacrylatpolyole. Besonders bevorzugt sind Polyoxyalkylenpolyole. Bevorzugte Polyoxyalkylenpolyole sind Polyoxypropylenpolyole und Polyoxyethylen-polyoxypropylen-Mischpolyole. Bevorzugt weist das Polyol ein Molekulargewicht von 2'000 bis 20'000 g/mol auf.

Bevorzugt ist das Polyol ein Diol.

Ein sekundäres Aminosilan der Formel (V) kann insbesondere durch die Kondensationsreaktion von mindestens einem Diaminosilan der Formel (VI) mit mindestens einem Aldehyd der Formel (VII) erhalten werden. Die Reaktanden können dabei in freier oder in derivatisierter Form vorliegen. 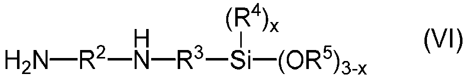 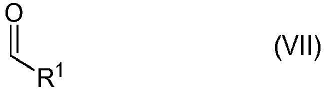 In den Formeln (VI) und (VII) weisen R¹, R², R³, R⁴, R⁵ und x die bereits genannten Bedeutungen auf.
Der Aldehyd der Formel (VII) kann in Bezug auf das Diaminosilan der Formel (VI) stöchiometrisch oder in stöchiometrischem Überschuss eingesetzt werden. Solche Kondensationsreaktionen zwischen primären Aminen und Aldehyden sind bestens bekannt. Im Fall von Silanen besteht die Schwierigkeit, dass das bei der Kondensation freigesetzte Wasser zu einer Hydrolyse von Silangruppen führen kann. Dies ist jedoch unerwünscht und sollte zur Erhaltung von qualitativ guten Produkten weitgehend unterdrückt werden.
Bevorzugt wird eine Herstellmethode, bei der das Diaminosilan der Formel (VI) vorgelegt und der Aldehyd der Formel (VII) zugetropft wird, wobei das gebildete Wasser vorteilhaft bereits während der Umsetzung aus der Reaktionsmischung entfernt wird, beispielsweise durch Destillation oder durch einen chemisch oder physikalisch wirkenden Wasserfänger. Die Reaktion kann bei Temperaturen von 5 bis 250 °C durchgeführt werden. Bevorzugt ist eine Reaktionstemperatur im Bereich von 20 bis 100 °C. Die Reaktion kann ohne Lösemittel oder in Anwesenheit eines Lösemittels durchgeführt werden. Als Lösemittel bevorzugt ist ein Lösemittel, welches mit Wasser ein Azeotrop bildet, oder derjenige Alkohol HOR⁵, welcher bei der Hydrolyse der Silangruppen freigesetzt wird, also Methanol bei der Verwendung eines Methoxysilans oder Ethanol bei Verwendung eines Ethoxysilans.

Ein sekundäres Aminosilan der Formel (V) kann insbesondere auch auf indirektem Weg als Produkt einer Umiminierungsreaktion erhalten werden. Dazu wird zuerst ein Zwischenprodukt hergestellt, indem der Aldehyd mit einem kleinen, relativ flüchtigen primären Monoamin, beispielsweise 2-Propanamin, umgesetzt und das entstandene Wasser auf geeignete Weise möglichst vollständig entfernt wird. Anschliessend wird das Zwischenprodukt mit dem Diaminosilan der Formel (VI) unter Umiminierung zum sekundären Aminosilan der Formel (V) umgesetzt, wobei das kleine, relativ flüchtige primäre Monoamin mittels Vakuum laufend aus der Reaktionsmischung entfernt wird.
Weiterhin kann ein sekundäres Aminosilan der Formel (V) insbesondere auch auf indirektem Weg über ein Acetal als Zwischenprodukt erhalten werden. Dazu wird der Aldehyd mit einem kleinen, relativ flüchtigen Alkohol kondensiert und das dabei freigesetzte Wasser auf geeignete Weise entfernt. Anschliessend wird das Acetal mit dem Diaminosilan der Formel (VI) zum sekundären Aminosilan der Formel (V), gegebenenfalls in Anwesenheit eines Katalysators, umgesetzt, wobei der kleine, relativ flüchtige Alkohol mittels Vakuum laufend aus der Reaktionsmischung entfernt wird.
Die Herstellung über ein Acetal und die Herstellung über eine Umiminierung haben den Vorteil, dass das entstehende Wasser jeweils entfernt werden kann, bevor es mit Silangruppen in Kontakt kommt und eine ungewollte Hydrolyse der Silangruppen hervorrufen kann.

Als Diaminosilan der Formel (VI) geeignet sind insbesondere N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxysilan und N-(2-Aminoethyl)-3-aminopropyl-triisopropoxysilan. Bevorzugt sind N-(2-Aminoethyl)-3-aminopropyl-trimethoxysilan und N-(2-Aminoethyl)-3-aminopropyl-triethoxysilan.

Als Aldehyd der Formel (VII) geeignet sind insbesondere 2-Methylpentanal, 2-Ethylbutanal, 2-Ethylhexanal, Dodecanal und Cyclohexylcarbaldehyd sowie die im weiteren als bevorzugt genannten Aldehyde.

Als Aldehyd der Formel (VII) bevorzugt sind Aldehyde, bei denen R¹ für einen Rest der Formel (II) steht, insbesondere 3-Acetoxy-2,2-dimethylpropanal, 2,2-Dimethyl-3-lauroyloxypropanal, N-(2,2-Dimethyl-3-oxopropyl)-N-methylacetamid, N-(2,2-Dimethyl-3-oxopropyl)-pyrrolidin-2-on und N-(2,2-Dimethyl-3-oxopropyl)-azepan-2-on.

Als Aldehyd der Formel (VII) besonders bevorzugt sind Aldehyde, bei denen R¹ für einen Rest der Formel (II) und Z für einen Rest der Formel (III) steht, insbesondere 2,2-Dimethyl-3-dimethylaminopropanal, 2,2-Dimethyl-3-diethylaminopropanal, 2,2-Dimethyl-3-dipropylaminopropanal, 2,2-Dimethyl-3-dibutylaminopropanal, 2,2-Dimethyl-3-(methylisobutylamino)propanal, 2,2-Dimethyl-3-(methyl-2-ethylhexylamino)propanal, 2,2-Dimethyl-3-(methylcyclohexylamino)propanal, 2,2-Dimethyl-3-(N-benzylmethylamino)-propanal, 2,2-Dimethyl-3-(N-benzylisopropylamino)-propanal, 2,2-Dimethyl-3-bis(methoxyethyl)aminopropanal, 2,2-Dimethyl-3-bis(ethoxyethyl)aminopropanal, 2,2-Dimethyl-3-(N-pyrrolidino)-propanal, 2,2-Dimethyl-3-(N-piperidino)-propanal, 3-(Azepan-1-yl)-2,2-dimethylpropanal, 2,2-Dimethyl-3-(N-morpholino)-propanal, 2,2-Dimethyl-3-(2,6-dimethylmorpholino)-propanal, 2,2-Dimethyl-3-(N-thiomorpholino)-propanal und 2,2-Dimethyl-3-(N-methylpiperazino)-propanal.
Davon bevorzugt sind 2,2-Dimethyl-3-dimethylaminopropanal, 2,2-Dimethyl-3-bis(methoxyethyl)aminopropanal und 2,2-Dimethyl-3-(N-morpholino)-propanal.

Ein weiterer Gegenstand der vorliegenden Erfindung ist eine feuchtigkeitshärtende Zusammensetzung enthaltend mindestens ein Polymer **SP** und mindestens einen weiteren Bestandteil.
Bevorzugt weist die feuchtigkeitshärtende Zusammensetzung einen Gehalt an Polymer **SP** von 5 bis 90 Gew.-%, insbesondere 10 bis 60 Gew.-%, auf.
Als weitere Bestandteile sind insbesondere Katalysatoren, Vernetzer, Weichmacher, Füllstoffe, Pigmente, Lösemittel, Haftvermittler, Trocknungsmittel, Rheologiehilfsmittel und Stabilisatoren geeignet.

Bevorzugt enthält die feuchtigkeitshärtende Zusammensetzung mindestens einen Katalysator, der die Vernetzung von Silangruppen-haltigen Polymeren beschleunigt. Dafür geeignet sind insbesondere Metallkatalysatoren und/oder stickstoffhaltige Verbindungen.
Geeignete Metallkatalysatoren sind Verbindungen von Titan, Zirkonium, Aluminium und Zinn, insbesondere Organozinn-Verbindungen, Organotitanate, Organozirkonate und Organoaluminate, wobei diese Metallkatalysatoren insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen und Dialkylpyrophosphatgruppen aufweisen.
Besonders geeignete Organozinn-Verbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat und Dioctylzinndiacetylacetonat, sowie Alkylzinnthioester.
Besonders geeignete Organotitanate sind die Folgenden:
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy und 2-Ethylhexoxy geeignet sind.
Ganz besonders geeignet sind Bis(Ethylacetoacetato)-diisobutoxy-titan(IV), Bis(Ethylacetoacetato)-diisopropoxy-titan(IV), Bis(Acetylacetonato)-diisopropoxy-titan(IV), Bis(Acetylacetonato)-diisobutoxy-titan(IV), Tris(oxyethyl)aminisopropoxy-titan(IV), Bis[tris(oxyethyl)amin]-diisopropoxy-titan(IV), Bis(2-Ethylhexan-1,3-dioxy)-titan(IV), Tris[2-((2-Aminoethyl)amino)ethoxy]-ethoxytitan(IV), Bis(Neopentyl(diallyl)oxy-diethoxy-titan(IV), Titan(IV)-tetrabutanolat, Tetra-(2-ethylhexyloxy)titanat, Tetra-(isopropoxy)titanat und Polybutyltitanat. Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Du Pont / Dorf Ketal); Tytan PBT, TET, X85, TAA, ET, S2, S4 oder S6 (alle von TensoChema) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).
Besonders geeignete Organozirkonate sind die kommerziell erhältlichen Typen Ken-React® NZ® 38J, KZ® TPPJ, KZ® TPP, NZ® 01, 09, 12 38, 44 oder 97 (alle von Kenrich Petrochemicals) und Snapcure® 3020, 3030, 1020 (alle von Johnson Matthey & Brandenberger).
Ein besonders geeignetes Organoaluminat ist der kommerziell erhältliche Typ K-Kat 5218 (von King Industries).

Als Katalysator geeignete stickstoffhaltige Verbindungen sind insbesondere Amine wie insbesondere N-Ethyl-diisopropylamin, N,N,N',N'-Tetramethyl-alkylendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxyanstelle der Methoxygruppen am Silicium; Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Dio-tolylguanidin, 2-tert.Butyl-1,1,3,3-tetramethylguanidin; und Imidazole wie insbesondere N-(3-Trimethoxysilylpropyl)-4,5-dihydroimidazol und N-(3-Triethoxysilylpropyl)-4,5-dihydroimidazol.
Insbesondere geeignet sind auch Kombinationen verschiedener Katalysatoren, insbesondere Kombinationen aus mindestens einem Metallkatalysator und mindestens einer stickstoffhaltigen Verbindung.

Als Katalysator bevorzugt sind Organozinn-Verbindungen, Organotitanate, Amine, Amidine, Guanidine und Imidazole. Besonders bevorzugt sind Organotitanate und Amidine.

Weitere geeignete Bestandteile der feuchtigkeithärtenden Zusammensetzung sind insbesondere die folgenden Hilfs- und Zusatzmittel:
- Haftvermittler und/oder Vernetzer, insbesondere Silane wie die bereits als Katalysator erwähnten Aminosilane, Aminosilane mit sekundären Aminogruppen, wie insbesondere N-Phenyl-, N-Cyclohexyl- und N-Alkylaminosilane, weiterhin Mercaptosilane, Epoxysilane, (Meth)acrylosilane, Anhydridosilane, Carbamatosilane, Alkylsilane und Iminosilane, sowie oligomere Formen dieser Silane, sowie Addukte aus primären Aminosilanen mit Epoxysilanen oder (Meth)acrylosilanen oder Anhydridosilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrimethoxysilan und die entsprechenden Silane mit Ethoxygruppen anstelle der Methoxygruppen, sowie oligomere Formen dieser Silane;
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- und Sulfonsäureester oder Polybutene;
- Lösemittel;
- anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Trocknungsmittel, insbesondere Tetraethoxysilan, Vinyltrimethoxy- oder Vinyltriethoxysilan und Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, sowie Calciumoxid oder Molekularsiebe;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Stabilisatoren gegen Oxidation, Wärme, Licht und UV-Strahlung;
- natürliche Harze, Fette oder Öle wie Kolophonium, Schellack, Leinöl, Rizinusöl und Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid und Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- und Tris(isopropylphenyl)phosphate unterschiedlichen Isopropylierungsgrades, Resorcinolbis(diphenylphosphat), Bisphenol-A-bis(diphenylphosphat) und Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in feuchtigkeitshärtenden Zusammensetzungen eingesetzte Substanzen.
Es kann sinnvoll sein, gewisse Bestandteile vor dem Einmischen in die feuchtigkeitshärtende Zusammensetzung chemisch oder physikalisch zu trocknen.

Die feuchtigkeitshärtende Zusammensetzung kann neben dem Polymer **SP** weitere Silangruppen-haltige Oligo- oder Polymere enthalten.

Die feuchtigkeitshärtende Zusammensetzung ist in einer bevorzugten Ausführungsform frei von Organozinn-Verbindungen. Dies kann aus ökologischen und/oder toxikologischen Gründen vorteilhaft sein.
Die feuchtigkeitshärtende Zusammensetzung setzt bei ihrer Aushärtung in einer weiteren bevorzugten Ausführungsform kein Methanol frei. Dies kann aus ökologischen und/oder toxikologischen Gründen vorteilhaft sein.

Die feuchtigkeitshärtende Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordung , wie insbesondere einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihrem Gebrauch relevanten Ausmass verändert. Üblicherweise wird die Lagerstabilität über die Messung der Viskosität oder der Auspresskraft ermittelt.

Die feuchtigkeitshärtende Zusammensetzung kann in Form einer einkomponentigen oder in Form einer zweikomponentigen Zusammensetzung vorliegen.

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen Zeitraum von mehreren Wochen bis Monaten lagerstabil ist und mit Feuchtigkeit härtbar ist.
Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden und welche jeweils für sich bei Raumtemperatur lagerstabil sind. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der feuchtigkeitshärtenden Zusammensetzung auf mindestens einen Festkörper oder Artikel kommen die vorhandenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen härtet die Zusammensetzung schliesslich aus. Dieser Vorgang wird auch als Vernetzung bezeichnet. Weiterhin können Silanolgruppen mit beispielsweise Hydroxylgruppen des Substrates, auf welches die Zusammensetzung appliziert ist, kondensieren, wodurch bei der Aushärtung eine ausgezeichnete Haftung der Zusammensetzung auf dem Substrat ausgebildet werden kann.
Das für die Aushärtung benötigte Wasser kann entweder aus der Luft stammen (Luftfeuchtigkeit), oder die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt demnach ein Mass für die Aushärtungsgeschwindigkeit dar.

Ein weiterer Gegenstand der vorliegenden Erfindung betrifft somit eine ausgehärtete Zusammensetzung, erhalten aus der Aushärtung der feuchtigkeitshärtenden Zusammensetzung mit Feuchtigkeit.

Die Zusammensetzung verfügt im ausgehärteten Zustand über elastische Eigenschaften, insbesondere eine gute Festigkeit und hohe Dehnbarkeit, eine gute Wärmebeständigkeit und gute Haftungseigenschaften auf diversen Substraten. Dadurch eignet sie sich für eine Vielzahl von Verwendungen, insbesondere als Faserverbundwerkstoff (Composite), Vergussmasse, Dichtstoff, Klebstoff, Belag, Beschichtung oder Anstrich für Bau- und Industrieanwendungen, beispielsweise als Elektroisolationsmasse, Spachtelmasse, Fugendichtstoff, Montageklebstoff, Karrosserieklebstoff, Scheibenklebstoff, Sandwichelementklebstoff, Kaschierklebstoff, Laminatklebstoff, Verankerungsklebstoff, Bodenbelag und -beschichtung, Balkon- und Dachbeschichtung, Betonschutzbeschichtung, Parkhausbeschichtung sowie Schutzanstrich gegen Korrosion, als Versiegelung, Anstrich, Lack und Primer.
Besonders geeignet ist die feuchtigkeitshärtende Zusammensetzung als Klebstoff und/oder Dichtstoff, insbesondere für die Fugenabdichtung und für elastische Klebeverbindungen in Bau- und Industrieanwendungen.

Ein weiterer Gegenstand der vorliegenden Erfindung ist somit die Verwendung der feuchtigkeitshärtenden Zusammensetzung als elastischer Klebstoff und/oder elastischer Dichtstoff.

Für eine Anwendung der Zusammensetzung als Dichtstoff, beispielsweise für Fugen im Hoch oder Tiefbau, oder für eine Anwendung als Klebstoff für elastische Verklebungen, beispielsweise im Fahrzeugbau, weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Substrat aufgetragen. Geeignete Methoden zum Auftragen sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters.
Ein Dichtstoff oder Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.
Ein Klebstoff für elastische Verklebungen, beispielsweise im Fahrzeugbau, wird bevorzugt in Form einer Raupe mit einer im Wesentlichen runden oder dreieckigen Querschnittsfläche aufgetragen.
In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff durch Kontakt mit Feuchtigkeit aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.
In der Anwendung als Dichtstoff wird die Zusammensetzung zwischen die Substrate **S1** und **S2** appliziert und anschliessend erfolgt die Aushärtung der Zusammensetzung durch Kontakt mit Feuchtigkeit. Üblicherweise wird der Dichtstoff in eine Fuge eingepresst.
In beiden Anwendungen kann das Substrat **S1** gleich oder verschieden von Substrat **S2** sein.
Geeignete Substrate **S1** oder **S2** sind insbesondere
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, sowie oberflächenveredelte Metalle und Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke, insbesondere Automobildecklacke.
Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.
Nach dem Verkleben oder Abdichten der Substrate **S1** und **S2** mittels einer erfindungsgemässen Zusammensetzung wird ein verklebter oder abgedichteter Artikel erhalten. Ein derartiger Artikel kann ein Bauwerk sein, insbesondere ein Bauwerk des Hoch- oder Tiefbaus, oder er kann ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet. "NK" steht für "Normklima".

**Viskositäten** wurden bestimmt auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10-100 s⁻¹).

### 1. Herstellung von sekundären Aminosilanen der Formel (II)

### Silan AS-1: N-(2-(2,2-Dimethyl-3-(N-morpholino)-propylidenamino)-ethyl)-3-aminopropyl-trimethoxysilan

In einem Rundkolben wurden 20.00 g 2,2-Dimethyl-3-(N-morpholino)-propanal unter Stickstoffatmosphäre vorgelegt, 6.90 g 2-Propanamin zugetropft, während 30 Minuten bei Raumtemperatur gerührt und anschliessend bei 80 °C flüchtige Anteile, insbesondere Wasser, unter Vakuum entfernt. Zur Umiminierung wurden anschliessend bei Raumtemperatur 32.46 g N-(2-Aminoethyl)-3-aminopropyltrimethoxysilan zugegeben, die Reaktionsmischung unter gutem Rühren auf 80 °C aufgeheizt und der Druck schrittweise auf 20 - 50 mbar reduziert, bis keine Blasen mehr entstanden, dann die Temperatur weiter auf 120 °C erhöht und der Druck auf 0.05 mbar reduziert, bis wiederum keine Blasen mehr entstanden. Das Reaktionsprodukt wurde auf Raumtemperatur abgekühlt und unter Ausschluss von Feuchtigkeit aufbewahrt. Erhalten wurde ein klares, gelbliches Öls.

### 2. Herstellung von Verbindungen mit Reaktivgruppen der Formel (I)

### Polymer SP-1

250 Gewichtsteile (GT) des Polyurethanpolymers *PU-1* wurden unter Stickstoffatmosphäre vorgelegt, 19.58 GT des Silans ***AS-1*** über einen Tropftrichter unter gutem Rühren zugegeben und bei Raumtemperatur gerührt, bis kein freies Isocyanat mittels IR-Spektroskopie mehr nachgewiesen wurde. Das Produkt wurde unter Ausschluss von Feuchtigkeit aufbewahrt. Die Viskosität bei 20 °C betrug 102 Pa·s.
Das Polyurethanpolymer *PU-1* wurde hergestellt, indem 720 g Polyol Acclaim® 12200 (Bayer Material Science; low monol Polyoxypropylendiol; OH-Zahl 11.0 mg KOH/g; Wassergehalt ca. 0.02 Gewichts-%), 34.5 g Isophorondiisocyanat (Vestanat® IPDI, Evonik Degussa), 80.0 g Diisodecylphtalat und 0.2 g Dibutylzinndilaurat unter Stickstoffatmosphäre vermischt, unter stetigem Rühren auf 90 °C aufgeheizt und auf dieser Temperatur belassen wurden, bis der titrimetrisch bestimmte Gehalt an freien Isocyanatgruppen einen Wert von 0.73 Gewichts-% erreicht hatte. Das Produkt wurde auf Raumtemperatur abgekühlt und unter Ausschluss von Feuchtigkeit aufbewahrt.

### 3. Herstellung von feuchtigkeitshärtenden Zusammensetzungen

### Referenz-Zusammensetzung Z-1 und erfindungsgemässe Zusammensetzungen Z-2 und Z-3

Für jede Zusammensetzung wurden die in der Tabelle 1 angegebenen Inhaltsstoffe in den angegebenen Mengen (in Gewichtsteilen) mittels eines Zentrifugalmischers (SpeedMixer™ DAC 150, FlackTek Inc.) unter Feuchtigkeitsausschluss vermischt und aufbewahrt. Jede Zusammensetzung wurde folgendermassen geprüft:
Zur Bestimmung der **Hautbildungszeit** wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.
Zur Bestimmung der mechanischen Eigenschaften wurde die Zusammensetzung auf einer PTFE-beschichteten Folie zu einem Film von 2 mm Dicke ausgegossen, dieser während 2 Wochen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul** (E-Modul bei 0.5-50 % Dehnung) geprüft.

Die **Shore A-Härte** wurde bestimmt nach DIN 53505 an während 14 Tagen im Normklima ausgehärteten Prüfkörpern.
Diese Resultate sind mit dem Zusatz "**NK:**" versehen.
Als Mass für die Wärmebeständigkeit wurden einige Hanteln, bzw. der Shore A-Prüfkörper, anschliessend an die 2 Wochen im Normklima zusätzlich während 1 Woche bei 90 °C in einem Umluftofen gelagert und anschliessend auf dieselbe Weise auf Zugfestigkeit, Bruchdehnung und E-Modul, bzw. auf Shore A-Härte, geprüft. Diese Resultate sind mit dem Zusatz "**90°C:**" versehen.
Die Resultate sind in der Tabellen 1 angegeben.

Das silanfunktionelle Polymer ***SP-2 (ref.)*** wurde wie das Polymer ***SP-1*** hergestellt, wobei aber anstelle des Silans **AS-1** 18.33 GT eines sekundären Aminosilans in Form eines Addukts aus Maleinsäurediethylester und 3-Aminopropyltrimethoxysilan zugegeben wurden. Die Viskosität bei 20 °C betrug 99 Pa·s.

**Tabelle 1: Zusammensetzung und Eigenschaften der Referenz-Zusammensetzung Z-1 und der erfindungsgemässen Zusammensetzungen Z-2 und Z-3.**

| **Zusammensetzung** | | **Z-1 *(Referenz)*** | ***Z-2*** | ***Z-3*** |
|---|---|---|---|---|
| Polymer ***SP*-*1*** | | - | 82.50 | 82.50 |
| Polymer ***SP-2 (ref.*)** | | 82.50 | - | - |
| Dynasylan® A-1120 ¹ | | 3.80 | 3.80 | 3.20 |
| Dynasylan® VTMO ² | | 0.30 | 0.30 | 0.30 |
| DBTDL ³ | | 0.40 | 0.40 | - |
| Polycat® DBU ⁴ | | - | - | 0.30 |
| Tyzor® IBAY ⁵ | | - | - | 1.00 |
| Diisodecylphtalat | | 13.00 | 13.00 | 12.70 |
| Hautbildungszeit [min] | | 40 | 30 | 35 |
| **NK:** | Shore A | 33 | 37 | 40 |
| Zugfestigkeit [MPa] | | 0.48 | 0.52 | 0.55 |
| Bruchdehnung [%] | | 88 | 76 | 78 |
| E-Modul [MPa] | | 0.56 | 0.68 | 0.71 |
| **90°C:** | Shore A | 31 | 31 | 33 |
| Zugfestigkeit [MPa] | | 0.49 | 0.37 | 0.41 |
| Bruchdehnung [%] | | 92 | 61 | 63 |
| E-Modul [MPa] | | 0.55 | 0.51 | 0.57 |

| | | | | |
|---|---|---|---|---|
| ¹ N-(2-Aminoethyl)3-aminopropyltrimethoxysilan von Evonik Degussa ² Vinyltrimethoxysilan von Evonik Degussa ³ Dibutylzinndilaurat 10 Gewichts-% in Diisodecylphtalat ⁴ 1,8-Diazabicyclo[5.4.0]undec-7-en von Air Products ⁵ Titan(IV)-Bis(Ethylacetoacetato)-Komplex von Du Pont / Dorf Ketal | | | | |

## Patentansprüche

1. Verbindung mit mindestens einer Reaktivgruppe der Formel (I), 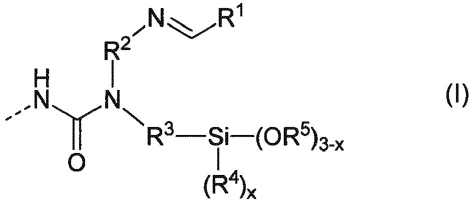 wobei
R¹ für einen einwertigen organischen Rest mit 5 bis 30 C-Atomen steht;
R² für einen linearen oder verzweigten Alkylen- oder Cycloalkylenrest mit 2 bis 6 C-Atomen steht;
R³ für einen linearen oder verzweigten Alkylen- oder Cycloalkylenrest mit 1 bis 12 C-Atomen steht;
R⁴ für eine Alkylgruppe mit 1 bis 6 C-Atomen steht;
R⁵ für eine Alkylgruppe mit 1 bis 10 C-Atomen, welche gegebenenfalls eine oder mehrere Ether-Sauerstoffe aufweist, steht; und
x für 0 oder 1 steht;
**dadurch gekennzeichnet, dass** sie ein silanfunktionelles Polymer darstellt und frei ist von Isocyanatgruppen, wobei für die Herstellung der Verbindung mit mindestens einer Reaktivgruppe der Formel (I) durch Umsetzung von mindestens einem Polyisocyanat mit mindestens einem sekundären Aminosilan der Formel (V) 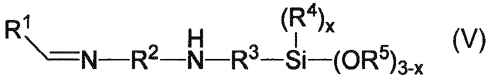
zu einem Addukt ein NH/NCO-Verhältnis von 1.0 bis 1.25 verwendet wird; oder
dass sie ein Isocyanatosilan der Formel (IV) darstellt, 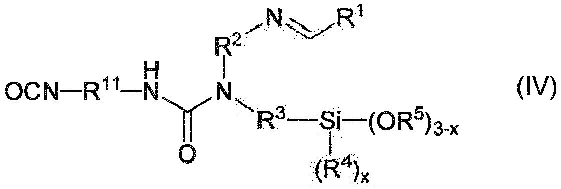 wobei
R¹¹ für einen zweiwertigen Kohlenwasserstoffrest mit 4 bis 16 C-Atomen steht, und wobei für die Herstellung des Isocyanatosilans der Formel (IV) ein NH/NCO-Verhältnis von ungefähr 0.5 verwendet wird.

2. Verbindung gemäss Anspruch 1, **dadurch gekennzeichnet, dass** R¹ für einen Rest der Formel (II) steht, 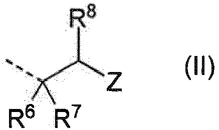 wobei
R⁶ und R⁷
entweder einzeln jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
R⁸ für Wasserstoff oder für eine Arylalkyl- oder Cycloalkyl- oder Alkylgruppe mit 1 bis 12 C-Atomen, insbesondere für ein Wasserstoffatom, steht; und
Z für eine Ether-, Ester-, Amido- oder tertiäre Aminogruppe mit bis zu 25 C-Atomen steht, wobei diese gegebenenfalls zusätzliche Ether-Sauerstoffe aufweisen.

3. Verbindung gemäss Anspruch 2, **dadurch gekennzeichnet, dass** Z für einen Rest der Formel (III) steht, 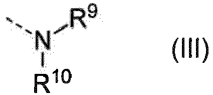 wobei
R⁹ und R¹⁰
entweder einzeln jeweils für einen einwertigen aliphatischen, cycloaliphatischen oder arylaliphatischen Rest mit 1 bis 20 C-Atomen, welcher gegebenenfalls Heteroatome in der Form von Ether-Sauerstoff oder tertiärem Amin-Stickstoff enthält, stehen,
oder zusammen für einen zweiwertigen aliphatischen Rest mit 3 bis 20 C-Atomen, der unter Einschluss des Stickstoffatoms einen heterocyclischen Ring mit 5 bis 8, bevorzugt 6, Ringatomen bildet und neben dem Stickstoffatom gegebenenfalls weitere Heteroatome in der Form von Ether-Sauerstoff oder tertiärem Amin-Stickstoff enthält, stehen.

4. Verbindung gemäss einem der Ansprüche 1 bis 3, **dadurch gekennzeichnet, dass** die Reaktivgruppen der Formel (I) mehrheitlich an cycloaliphatische Reste gebunden sind.

5. Verbindung gemäss einem der Ansprüche 1 bis 4, wobei sie ein silanfunktionelles Polymer darstellt und frei ist von Isocyanatgruppen, **dadurch gekennzeichnet, dass** das Polymer ein Molekulargewicht im Bereich von 1'000 bis 30'000 g/mol aufweist.

6. Verbindung gemäss einem der Ansprüche 1 bis 5, wobei sie ein silanfunktionelles Polymer darstellt und frei ist von Isocyanatgruppen, **dadurch gekennzeichnet, dass** das Polymer mehrheitlich Polyoxyalkyleneinheiten aufweist.

7. Vernetzter Kunststoff erhalten durch die Reaktion mindestens einer Verbindung gemäss einem der Ansprüche 1 bis 6, wobei sie ein silanfunktionelles Polymer darstellt und frei ist von Isocyanatgruppen, mit Feuchtigkeit.

8. Verfahren zur Herstellung einer Verbindung gemäss Anspruch 1, wobei sie ein Isocyanatosilan der Formel (IV) darstellt, **dadurch gekennzeichnet, dass** mindestens ein Diisocyanat mit mindestens einem sekundären Aminosilan der Formel (V) zu einem Addukt umgesetzt wird, 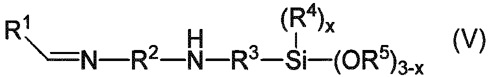 wobei
R¹ für einen einwertigen organischen Rest mit 5 bis 30 C-Atomen steht;
R² für einen linearen oder verzweigten Alkylen- oder Cycloalkylenrest mit 2 bis 6 C-Atomen steht;
R³ für einen linearen oder verzweigten Alkylen- oder Cycloalkylenrest mit 1 bis 12 C-Atomen steht;
R⁴ für eine Alkylgruppe mit 1 bis 6 C-Atomen steht;
R⁵ für eine Alkylgruppe mit 1 bis 10 C-Atomen, welche gegebenenfalls eine oder mehrere Ether-Sauerstoffe aufweist, steht; und
x für 0 oder 1 steht.

9. Feuchtigkeitshärtende Zusammensetzung enthaltend mindestens eine Verbindung gemäss einem der Ansprüche 1 bis 4, wobei sie ein silanfunktionelles Polymer darstellt und frei ist von Isocyanatgruppen, und mindestens einen weiteren Bestandteil.

10. Verwendung der feuchtigkeitshärtenden Zusammensetzung gemäss Anspruch 9 als elastischer Klebstoff und/oder elastischer Dichtstoff.

11. Ausgehärtete Zusammensetzung erhalten aus der Aushärtung der Zusammensetzung gemäss Anspruch 9 mit Feuchtigkeit.

## Claims

1. Compound having at least one reactive group of the formula (I) 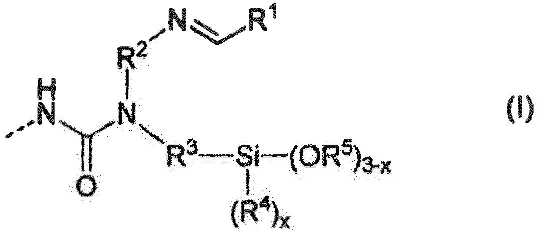 where
R¹ is a monovalent organic moiety having from 5 to 30 C atoms;
R² is a linear or branched alkylene or cycloalkylene moiety having from 2 to 6 C atoms;
R³ is a linear or branched alkylene or cycloalkylene moiety having from 1 to 12 C atoms;
R⁴ is an alkyl group having from 1 to 6 C atoms;
R⁵ is an alkyl group having from 1 to 10 C atoms which optionally has one or more ether-oxygens; and x is 0 or 1;
**characterized in that** it is a silane-functional polymer and is free from isocyanate groups, where an NH/NCO ratio of from 1.0 to 1.25 is used for the production of the compound having at least one reactive group of the formula (I) via reaction of at least one polyisocyanate with at least one secondary aminosilane of the formula (V) 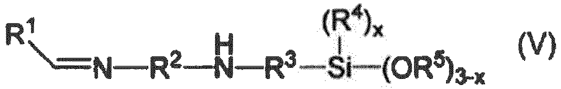
to give an adduct;
or
that it is an isocyanatosilane of the formula (IV) 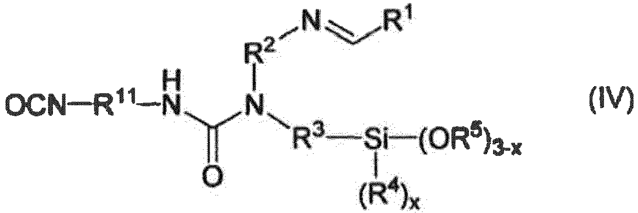 where
R¹¹ is a divalent hydrocarbon moiety having from 4 to 16 C atoms, and where an NH/NCO ratio of about 0.5 is used for the production of the isocyanatosilane of the formula (IV).

2. Compound according to Claim 1, **characterized in that** R¹ is a moiety of the formula (II) 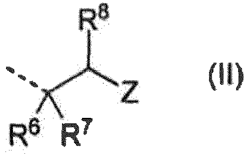 where
R⁶ and R⁷
either individually respectively are a monovalent hydrocarbon moiety having from 1 to 12 C atoms or together are a divalent hydrocarbon moiety having from 4 to 12 C atoms that is part of an optionally substituted carbocyclic ring having from 5 to 8, preferably 6, C atoms;
R⁸ is hydrogen or is an arylalkyl or cycloalkyl or alkyl group having from 1 to 12 C atoms, in particular is a hydrogen atom;
and
Z is an ether group, ester group, amido group or tertiary amino group having up to 25 C atoms, where these optionally have additional ether-oxygens.

3. Compound according to Claim 2, **characterized in that** Z is a moiety of the formula (III) 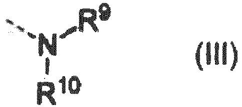 where
R⁹ and R¹⁰
are either individually respectively a monovalent aliphatic, cycloaliphatic or arylaliphatic moiety having from 1 to 20 C atoms which optionally comprises heteroatoms in the form of ether-oxygen or tertiary-amine-nitrogen
or together are a divalent aliphatic moiety having from 3 to 20 C atoms that, with inclusion of the nitrogen atom, forms a heterocyclic ring having from 5 to 8, preferably 6, ring atoms, and that optionally comprises, alongside the nitrogen atom, further heteroatoms in the form of ether-oxygen or of tertiary-amine-nitrogen.

4. Compound according to any of Claims 1 to 3, **characterized in that** a majority of the reactive groups of the formula (I) have bonding cycloaliphatic moieties.

5. Compound according to any of Claims 1 to 4 which is a silane-functional polymer and is free from isocyanate groups, **characterized in that** a molar mass of the polymer is in the range from 1000 to 30 000 g/mol.

6. Compound according to any of Claims 1 to 5 which is a silane-functional polymer and is free from isocyanate groups, **characterized in that** the polymer has a majority of polyoxyalkylene units.

7. Crosslinked plastic obtained via the reaction with moisture of at least one compound according to any of Claims 1 to 6 which is a silane-functional polymer and is free from isocyanate groups.

8. Process for the production of a compound according to Claim 1 which is an isocyanatosilane of the formula (IV), **characterized in that** at least one diisocyanate is reacted with at least one secondary aminosilane of the formula (V) to give an adduct 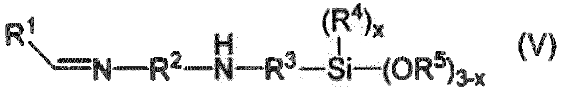 where
R¹ is a monovalent organic moiety having from 5 to 30 C atoms;
R² is a linear or branched alkylene or cycloalkylene moiety having from 2 to 6 C atoms;
R³ is a linear or branched alkylene or cycloalkylene moiety having from 1 to 12 C atoms;
R⁴ is an alkyl group having from 1 to 6 C atoms;
R⁵ is an alkyl group having from 1 to 10 C atoms which optionally has one or more ether-oxygens; and x is 0 or 1.

9. Moisture-curing composition comprising at least one compound according to any of Claims 1 to 4 which is a silane-functional polymer and is free from isocyanate groups, and at least one further constituent.

10. Use of the moisture-curing composition according to Claim 9 as elastic adhesive and/or elastic sealant.

11. Hardened composition obtained from hardening of the composition according to Claim 9 with moisture.

## Revendications

1. Composé contenant au moins un groupe réactif de formule (I) 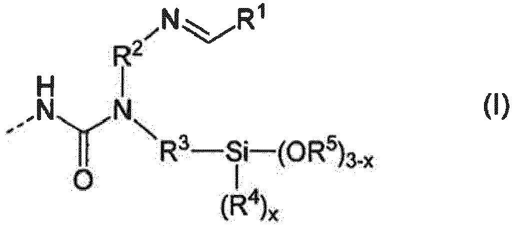 dans laquelle
R¹ représente un radical organique monovalent de 5 à 30 atomes C ;
R² représente un radical alkylène ou cycloalkylène linéaire ou ramifié de 2 à 6 atomes C ;
R³ représente un radical alkylène ou cycloalkylène linéaire ou ramifié de 1 à 12 atomes C ;
R⁴ représente un groupe alkyle de 1 à 6 atomes C ;
R⁵ représente un groupe alkyle de 1 à 10 atomes C, qui comprend éventuellement un ou plusieurs oxygènes d'éther ; et
x représente 0 ou 1 ;
**caractérisé en ce qu'**il consiste en un polymère à fonction silane et est exempt de groupes isocyanate, pour la fabrication du composé contenant au moins un groupe réactif de formule (I) par mise en réaction d'au moins un polyisocyanate avec au moins un aminosilane secondaire de formule (V) 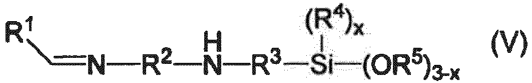
pour former un adduit, un rapport NH/NCO de 1,0 à 1,25 étant utilisé ;
ou
**en ce qu'**il consiste en un isocyanatosilane de formule (IV) 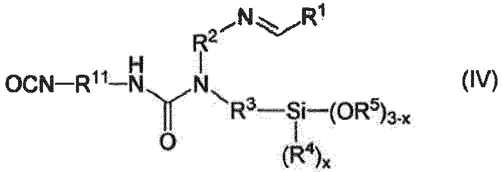
dans laquelle
R¹¹ représente un radical hydrocarboné bivalent de 4 à 16 atomes C, pour la fabrication de l'isocyanatosilane de formule (IV), un rapport NH/NCO d'environ 0,5 étant utilisé.

2. Composé selon la revendication 1, **caractérisé en ce que** R¹ représente un radical de formule (II) 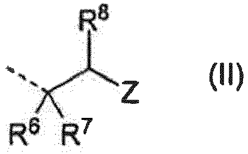 dans laquelle
R⁶ et R⁷
soit représentent chacun individuellement un radical hydrocarboné monovalent de 1 à 12 atomes C,
soit représentent ensemble un radical hydrocarboné bivalent de 4 à 12 atomes C, qui fait partie d'un cycle carbocyclique éventuellement substitué de 5 à 8, de préférence 6, atomes C ;
R⁸ représente l'hydrogène ou un groupe arylalkyle ou cycloalkyle ou alkyle de 1 à 12 atomes C, notamment un atome d'hydrogène ;
et
Z représente un groupe éther, ester, amido ou amino tertiaire contenant jusqu'à 25 atomes C, ceux-ci comprenant éventuellement des oxygènes d'éther supplémentaires.

3. Composé selon la revendication 2, **caractérisé en ce que** Z représente un radical de formule (III) 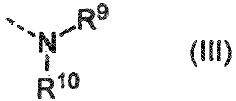 dans laquelle
R⁹ et R¹⁰
soit représentent chacun individuellement un radical aliphatique, cycloaliphatique ou arylaliphatique monovalent de 1 à 20 atomes C, qui contient éventuellement des hétéroatomes sous la forme d'un oxygène d'éther ou d'un azote d'aminé tertiaire,
soit représentent ensemble un radical aliphatique bivalent de 3 à 20 atomes C, qui forme en incluant l'atome d'azote un cycle hétérocyclique de 5 à 8, de préférence 6, atomes de cycle, et contient en plus de l'atome d'azote éventuellement d'autres hétéroatomes sous la forme d'un oxygène d'éther ou d'un azote d'aminé tertiaire.

4. Composé selon l'une quelconque des revendications 1 à 3, **caractérisé en ce que** les groupes réactifs de formule (I) sont majoritairement reliés à des radicaux cycloaliphatiques.

5. Composé selon l'une quelconque des revendications 1 à 4, celui-ci consistant en un polymère à fonction silane et étant exempt de groupes isocyanate, **caractérisé en ce que** le polymère présente un poids moléculaire dans la plage allant de 1 000 à 30 000 g/mol.

6. Composé selon l'une quelconque des revendications 1 à 5, celui-ci consistant en un polymère à fonction silane et étant exempt de groupes isocyanate, **caractérisé en ce que** le polymère comprend majoritairement des unités polyoxyalkylène.

7. Matière plastique de réticulation obtenue par la réaction d'au moins un composé selon l'une quelconque des revendications 1 à 6, celui-ci consistant en un polymère à fonction silane et étant exempt de groupes isocyanate, avec de l'humidité.

8. Procédé de fabrication d'un composé selon la revendication 1, celui-ci consistant en un isocyanatosilane de formule (IV), **caractérisé en ce qu'**au moins un diisocyanate est mis en réaction avec au moins un aminosilane secondaire de formule (V) pour former un adduit 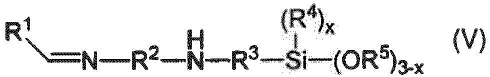 dans laquelle
R¹ représente un radical organique monovalent de 5 à 30 atomes C ;
R² représente un radical alkylène ou cycloalkylène linéaire ou ramifié de 2 à 6 atomes C ;
R³ représente un radical alkylène ou cycloalkylène linéaire ou ramifié de 1 à 12 atomes C ;
R⁴ représente un groupe alkyle de 1 à 6 atomes C ;
R⁵ représente un groupe alkyle de 1 à 10 atomes C, qui comprend éventuellement un ou plusieurs oxygènes d'éther ; et
x représente 0 ou 1.

9. Composition durcissant à l'humidité contenant au moins un composé selon l'une quelconque des revendications 1 à 4, celui-ci consistant en un polymère à fonction silane et étant exempt de groupes isocyanate, et au moins un autre constituant.

10. Utilisation de la composition durcissant à l'humidité selon la revendication 9 en tant qu'adhésif élastique et/ou matériau d'étanchéité élastique.

11. Composition durcie obtenue par durcissement de la composition selon la revendication 9 avec de l'humidité.
